# EUROPÄISCHE PATENTSCHRIFT

(11) **EP 1 304 214 B1**
(45) Veröffentlichungstag und Bekanntmachung des Hinweises auf die Patenterteilung: **14.11.2007**
(21) Anmeldenummer: 02021417.7
(22) Anmeldetag: 25.09.2002
(51) Int. Cl.: B65H 19/18, B29C 65/00

(54) **Verfahren zum Verbinden zweier Enden von flachliegenden und mit Seitenfalten versehenen Schlauchfolienbahnen**
Method of joining two gusseted tubular webs
Procédé pour relier des matériaux en bande tubulaires à soufflets latéraux

(30) Priorität: 17.10.2001 DE 10151144
(43) Veröffentlichungstag der Anmeldung: 23.04.2003
(73) Patentinhaber: Windmöller & Hölscher KG, 49525 Lengerich (DE)
(72) Erfinder: Nobbe, Ludger, 49170 Hagen (DE)

(56) Entgegenhaltungen:
- EP-A- 1 201 585
- US-A- 4 561 107
- US-A- 4 610 742

## Beschreibung

Die Erfindung betrifft ein Verfahren zum Verbinden zweier Enden von flachliegenden und mit Seitenfalten versehenen Schlauchfolienbahnen aus thermoplastischem Kunststoff, vorzugsweise zum Verbinden des Endes einer Seitenfaltenschlauchfolienrolle mit dem Anfang einer neuen Seitenfaltenschlauchfolienrolle (siehe US 4561107 A bzw EP 1201585 A).

Aus kontinuierlich und intermittierend vorgezogenen oder geförderten flachliegenden Seitenfaltenschlauchfolienbahnen aus thermoplastischem Kunststoff werden üblicherweise Säcke hergestellt. Um die kontinuierliche Fertigung nach Auslauf einer Seitenfaltenschlauchfolienrolle nicht durch Einlegen einer neuen Seitenfaltenschlauchfolienrolle unterbrechen zu müssen, ist es erforderlich, das Ende der auslaufenden Seitenfaltenschlauchfolienrolle mit dem Anfang der neuen Seitenfaltenschlauchfolienrolle in einer Weise zu verbinden, daß die kontinuierliche Förderung und Herstellung der Säcke nicht unterbrochen wird. Dies erfordert eine Verbindung der Enden der Seitenfaltenschlauchfolienbahnen in einer Weise, daß die Seitenfalten an der Verbindungsstelle durchgängig erhalten bleiben, also die aufeinanderliegenden Lagen der Seitenfalten nicht miteinander verklebt oder verschweißt sind. Diese Durchgängigkeit der Seitenfalten im Verbindungsbereich kann beispielsweise dann nicht erreicht werden, wenn die miteinander zu verbindenden Enden aufeinander gelegt und durch eine Querschweißnaht miteinander verbunden werden, die sodann sämtliche Lagen erfaßt und miteinander verschweißt werden.

Aufgabe der Erfindung ist es daher, ein Verfahren der eingangs angegebenen Art vorzuschlagen, das ein Verschweißen der Enden von Seitenfaltenschlauchfolienbahnen in einer Weise ermöglicht, daß die aufeinanderliegenden Lagen der Seitenfalten nicht miteinander verschweißen.

Erfindungsgemäß wird diese Aufgabe bei einem Verfahren der eingangs angegebenen Art dadurch gelöst, daß ein Ende mit die Innenkanten der Seitenfalten auftrennenden Schnitten versehen und das andere Ende in den aufgetrennten Bereich in der Weise eingeschoben oder eingelegt wird, daß die beiden Wände mit je einer Lage jeder Seitenfalte des Endbereichs der einen Schlauchfolie das andere Ende zwischen sich einfassen und daß in die Seitenfalten des eingefaßten anderen Endbereichs Trennschichten eingeschoben oder eingelegt und die Enden sodann durch eine Querschweißnaht miteinander verbunden werden.

Das erfindungsgemäße Verfahren ermöglicht das Verbinden der Enden zweier Seitenfaltenschlauchfolienbahnen in einer Weise, daß die aufeinanderliegenden Wände der eingelegten Seitenfalten nicht miteinander verschweißen, so daß die Seitenfalten von den Außenseiten her durchgängig erhalten bleiben und ein Verbinden der Enden in einer Weise möglich ist, die den kontinuierlichen Herstellungsprozeß beispielsweise von Säcken oder Tragetaschen nicht unterbricht. Ein Sack, der den Verbindungsbereich enthält, kann problemlos als Ausschuß beseitigt werden.

Zweckmäßigerweise werden die Innenkanten des Anfangs der neuen Schlauchfolienrolle aufgetrennt, da sich die daraus ergebende Verbindung besser in den Herstellungsprozeß einordnet.

Ein Ausführungsbeispiel wird nachstehend anhand der Zeichnung näher erläutert. In dieser zeigt
- Fig. 1: eine perspektivische Ansicht eines Rollenanfangs einer neuen Rolle, die mit die Innenkanten der Seitenfalten auftrennenden Schnitte versehen ist,
- Fig. 2: eine Draufsicht auf die miteinander verbundenen Enden zweier Seitenfaltenschlauchfolienbahnen,
- Fig. 3: eine Seitenansicht eines Endbereichst einer Seitenfaltenschlauchfolienbahn, bei der die Innenkanten der Seitenfalten mit Trennschnitten versehen und die Ober- und Unterseiten der Bahn in einer Weise aufgeklappt sind, däß das Ende der zu verbindenden Bahn in den aufgeklappten Bereich eingeschoben ist, und

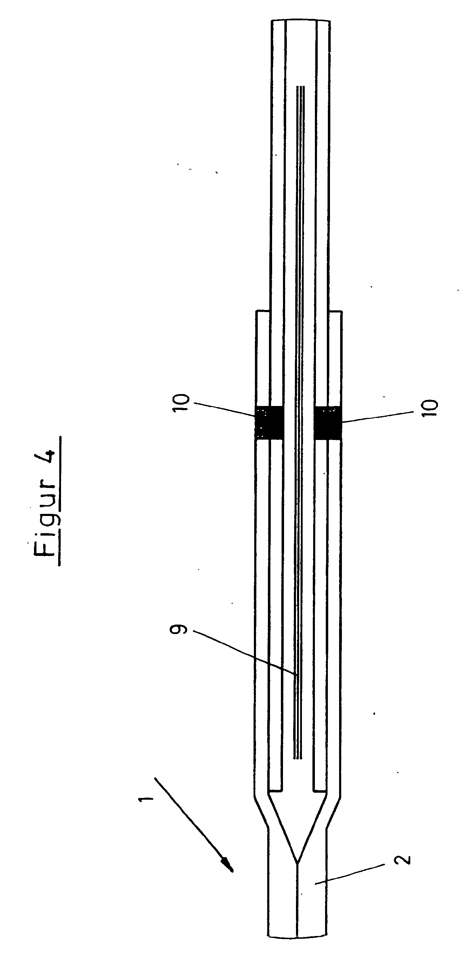

- Fig. 4: eine der Fig. 3 entsprechende Darstellung, in der die Bahnen durch eine Querschweißnaht miteinander verbunden sind.

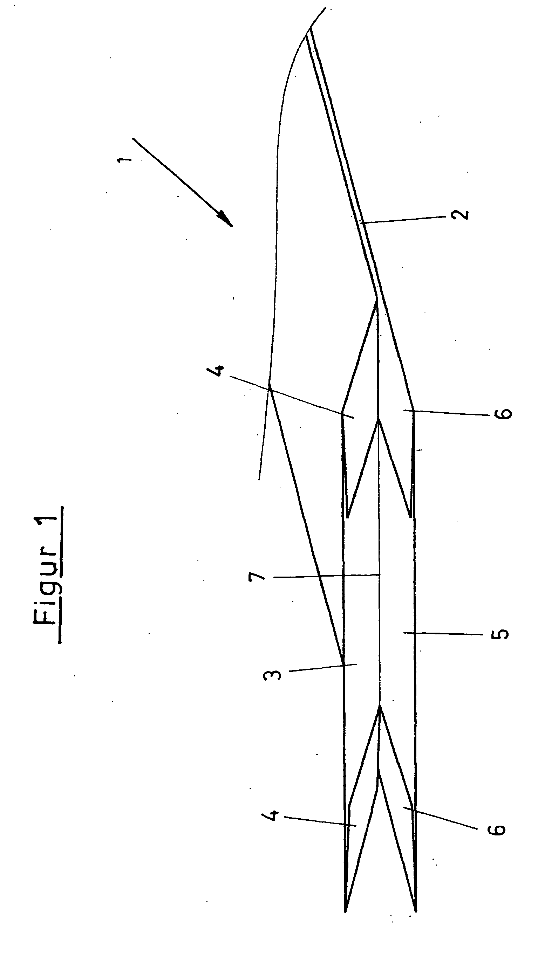

Aus Fig. 1 ist der mit einer querverlaufenden Schnittkante versehene Anfang einer an das Ende einer auslaufenden Seitenfaltenfolienbahnrolle anzuschließenden Seitenfaltenschlauchfolienbahn 1 ersichtlich. Die Innenkanten der Seitenfalten 2 sind im Endbereich aufgeschnitten, so daß sich die Oberseite 3 der Seitenfaltenschlauchfolienbahn 1 mit den oberen Lagen 4 der Seitenfalten 2 von der unteren Lage 5 mit den Seitenfaltenlagen 6 bis zu einer Linie 7 abheben läßt, die durch die inneren Enden der die Seitenfalten auftrennenden Trennschnitte definiert ist.

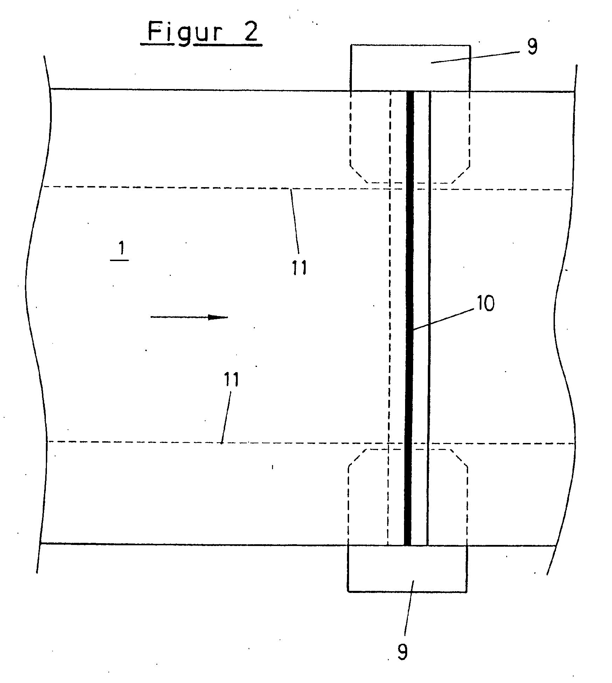

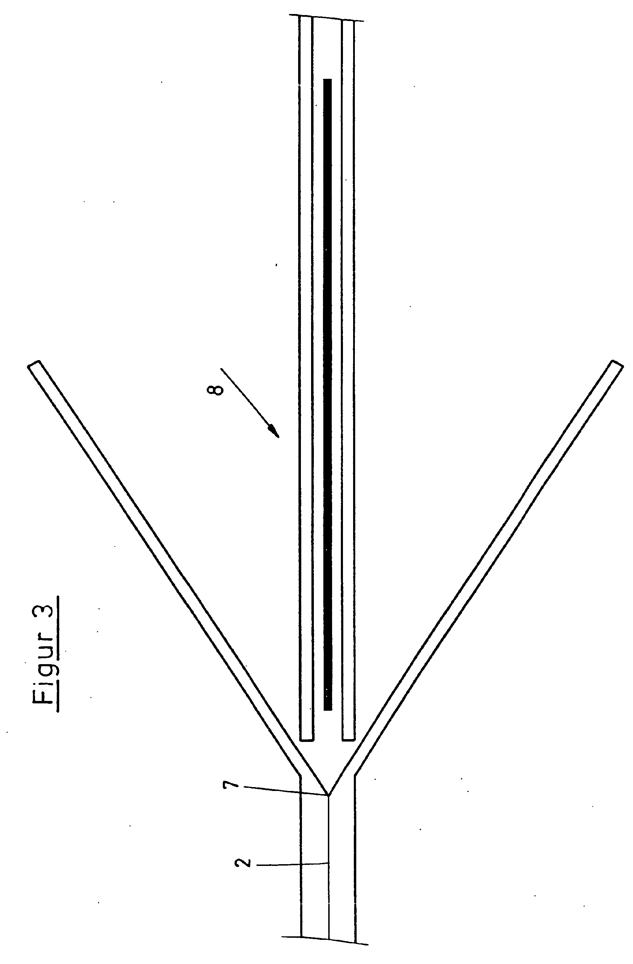

Nach dem Aufklappen des Endbereichs der Schlauchfolienbahn 1 durch Abheben der Ober- und Unterseiten 3, 5 mit den durch den Trennschnitt voneinander getrennten Lagen 4, 6 der Seitenfalten 2 bis zu der querverlaufenden Linie 7 wird das anzuschließende Ende 8 der zweiten Seitenfaltenschlauchfolienbahn in der aus Fig. 3 ersichtlichen Weise in den aufgeklappten Bereich eingeschoben. In den Anfangsbereich der Seitenfalten des Anfangs 8 der anzuschließenden Schlauchfolienbahn werden sodann von beiden Seiten her Trennschichten, beispielsweise Trennbleche 9 in der aus Fig. 2 ersichtlichen Weise eingeschoben. Die abgeklappten Lagen der anzuschließenden Bahn werden sodann deckungsgleich auf das Ende der auslaufenden Bahn aufgelegt und die im Bereich der Trennschicht 9 ineinanderliegenden Endbereiche der miteinander zu verbindenden Bahnen werden sodann durch eine Querschweißnaht 10 miteinander verbunden. Die zwischen den Innenkanten 11 der Seitenfalten liegenden Bereiche der oberen und unteren Wandungen der zu verbindenden Enden der Seitenfaltenschlauchfolienbahnen werden durch die Querschweißnaht 10 miteinander verschweißt. In dem Verbindungsbereich verschweißen jedoch wegen der eingeschobenen Trennschicht 9 die aufeinanderliegenden Lagen des eingeschobenen Endes der Seitenfaltenschlauchfolienbahn nicht miteinder, so daß der innere Seitenfaltenbereich auch in dem Verbindungsbereich durchgängig bleibt. Durch die Querschweißnaht werden jedoch jeweils an die Außen- und Innenseiten angrenzenden Lagen der Seitenfalten mit diesen Lagen und die durch die Trennschnitte freigeschnittenen Endbereiche der Seitenfalten mit den von diesen eingefaßten Außenseiten des eingeschobenen Endes der Seitenfaltenschlauchfolienbahn verschweißt.

## Patentansprüche

1. Verfahren zum Verbinden zweier Enden von flachliegenden und mit Seitenfalten (2) versehenen Schlauchfolienbahnen aus thermoplastischem Kunststoff, vorzugsweise zum Verbinden des Endes einer Seitenfaltenschlauchfolienrolle mit dem Anfang einer neuen Seitenfaltenschlauchfolienrolle,
**dadurch gekennzeichnet,**
**daß** ein Ende mit die Innenkanten der Seitenfalten (2) auftrennenden Schnitten versehen und das andere Ende in den aufgetrennten Bereich in der Weise eingeschoben oder eingelegt wird, daß die beiden Wände (3, 5) mit je einer Lage (4, 6) jeder Seitenfalte (2) des Endbereichs der einen Schlauchfolie (1) das andere Ende zwischen sich einfassen und
**daß** in die Seitenfalten des eingefaßten anderen Endbereichs Trennschichten (9) eingeschoben oder eingelegt und die Enden sodann durch eine Querschweißnaht (10) miteinander verbunden werden.

2. Verfahren nach Anspruch 1, **dadurch gekennzeichnet, daß** die Innenkanten des Anfangs der neuen Schlauchfolienrolle (1) aufgetrennt werden.

## Claims

1. Method for joining two ends of tubular film webs of thermoplastic material that are lying flat and provided with side gussets (2), preferably for joining the end of a roll of side-gusseted tubular film to the beginning of a new roll of side-gusseted tubular film,
**characterized**
**in that** one end is provided with cuts cutting open the inner edges of the side gussets (2) and the other end is pushed or placed into the cut-open region in such a way that the two walls (3, 5), each with a layer (4, 6) of each side gusset (2) of the end region of one tubular film (1), enclose the other end between them and
**in that** separating layers (9) are pushed or placed into the side gussets of the enclosed other end region and the ends are then joined to each other by a transverse welded seam (10).

2. Method according to claim 1, **characterized in that** the inner edges of the beginning of the new roll of tubular film (1) are cut open.

## Revendications

1. Procédé pour relier deux extrémités de feuilles en bandes tubulaires dotées de soufflets latéraux (2) en matière thermostatique se trouvant à plat, de préférence pour relier la fin d'une bobine de feuilles en bandes tubulaires à soufflets latéraux au début d'une nouvelle bobine de feuilles en bandes tubulaires à soufflets latéraux,
**caractérisé en ce que**
l'on dote une extrémité de coupes entaillant les arêtes intérieures des soufflets latéraux (2) et on glisse ou on introduit l'autre extrémité dans la zone entaillée de telle sorte que les deux parois (3, 5) bordent l'autre extrémité entre elles, chacune avec une couche (4, 6) de chaque soufflet latéral (2) de la zone d'extrémité de l'une feuille tubulaire (1) et
**en ce que** des couches de séparation (9) sont glissées ou sont introduites dans les soufflets latéraux de l'autre zone d'extrémité bordée et que les extrémités sont alors reliées l'une à l'autre par un cordon de soudure transversal (10).

2. Procédé selon la revendication 1, **caractérisé en ce que** les arêtes intérieures du début de la nouvelle bobine de feuille tubularie (1) sont sectionnées.
